## Europäisches Patentamt

## European Patent Office

## Office européen des brevets

(11) Veröffentlichungsnummer: **0 293 799**
**B1**

(12) # EUROPÄISCHE PATENTSCHRIFT

(45) Veröffentlichungstag der Patentschrift:
**07.11.90**

(51) Int. Cl.⁵: **F17C 13/02,** F17C 5/00,
F25B 45/00

(21) Anmeldenummer: **88108608.6**

(22) Anmeldetag: **30.05.88**

(54) In die Strömungswege einer Anlage zum Umfüllen gasförmiger und/oder flüssiggasförmiger Druckmedien einsetzbare Kontrollarmatur.

(30) Priorität: **04.06.87 CH 2121/87**

(43) Veröffentlichungstag der Anmeldung:
**07.12.88 Patentblatt 88/49**

(45) Bekanntmachung des Hinweises auf die Patenterteilung:
**07.11.90 Patentblatt 90/45**

(84) Benannte Vertragsstaaten:
**AT BE DE ES FR GB IT NL SE**

(56) Entgegenhaltungen:
**CH-A- 656 694
US-A- 3 785 163
US-A- 4 092 865**

(73) Patentinhaber: **Mock, Bruno Armin, Buolterlistrasse 63,
CH-6052 Hergiswil NW(CH)**

(72) Erfinder: **Mock, Bruno Armin, Buolterlistrasse 63,
CH-6052 Hergiswil NW(CH)**

(74) Vertreter: **Petschner, Goetz, Patentanwaltsbüro G.
Petschner Seidengasse 18, CH-8001 Zürich(CH)**

## Beschreibung

Die vorliegende Erfindung betrifft eine in die Strömungswege einer Anlage zum Umfüllen gasförmiger und/oder flüssiggasförmiger Druckmedien einsetzbare Kontrollarmatur, welche sowohl niederdruckseitig als auch hochdruckseitig zum Anschluss an den Kreislauf einer zu füllenden Anlage dienende, absperrbare Anschluss-Stutzen sowie weitere, mit ersteren kommunizierende Anschluss-Mittel für den Anschluss einer Vacuum-Pumpe resp. an einen das Druckmedium enthaltenden Vorratsbehälter umfasst, und bei welcher Manometer mit den gehäuseinneren Kanalabschnitten der Anschluss-Mittel in Wirkungsverbindung stehen.

In vielen Bereichen der Technik, beispielsweise in der Kühltechnik ist es notwendig, Druckmedien in Behältnisse umzufüllen, wobei letztere vorgängig zu evakuieren sind. Beispielsweise verlangen Kühlschränke oder insbesondere auch Auto-Klimaanlagen zur erstmaligen Ingangsetzung oder nach Reparaturen des Systems ein Einfüllen eines Kühlmittels, in der Regel in Form eines Flüssiggases, in den Kreislauf der Anlage, wofür dieser Kreislauf zunächst evakuiert werden muss.

Um diesen Vorgang auch in kleineren Werkstätten oder auch mobil durchführen zu können, ist es notwendig, dass sich der betreffende Monteur einer Kontrollarmatur bedienen kann, die eine optimale Handhabung für den nicht ungefährlichen Umfüllvorgang zulässt.

Entsprechend befindet sich eine Kontrollarmatur des gleichen Anmelders auf dem Markt, deren Armaturgehäuse in eine Niederdruckseite zum Evakuieren des zu füllenden Systems und in eine Hochdruckseite zur Gaseinfüllung unterteilt ist. Der Verbindungskanal auf der Niederdruckseite zwischen dem Absperrventil des Ansaugstutzens und dem Absperrventil des Pumpenanschluss-Stutzens sowie der Verbindungskanal auf der Hochdruckseite zwischen dem Absperrventil des Druckmedien-Einlass-Stutzens und dem Absperrventil des Druckmedien-Auslass-Stutzens sind dabei über einen gemeinsamen, jeweils eine Umlenkschleife für den betreffenden Verbindungskanal bildenden Kanalabschnitt im Armaturgehäuse in Strömungsverbindung (CH-A 656 694).

Bei einer solchen Bauweise ist ein sehr lang gestrecktes, ausladendes Armaturgehäuse mit nur schwierig herzustellenden Strömungswegen unumgänglich, was neben hohen Kosten auch eine unbefriedigende Handhabung verursacht. Das Ganze pendelt leicht und die angeschlossenen Schläuche können knicken.

Es ist somit Aufgabe der vorliegenden Erfindung, eine Kontrollarmatur der vorgenannten Art in der Weise auszugestalten, dass sich diese sicherer handhaben und einfacher herstellen lässt.

Dies wird erfindungsgemäss dadurch erreicht, dass das Armaturgehäuse wenigstens angenähert hexagonförmig ausgebildet ist, wobei ein paralleles Seitenpaar die obere resp. untere Gehäuse-Schmalseite bildet, zwischen welchen sich senkrecht und etwa zentrisch der gehäuseinnere Kanalabschnitt des Anschluss-Stutzens für die Vacuum-Pumpe resp. den Druckmediums-Vorratsbehälter erstreckt, in dessen oberem Endbereich die Kanalabschnitte des Ansaugstutzens resp. des Auslass-Stutzens einmünden, die je parallel und nahe den, an der oberen Schmalseite anschliessenden Schmalseiten des Gehäuses verlaufen.

Durch diese Massnahmen ist es nunmehr möglich, das Armaturgehäuse sehr kompakt und handlich auszugestalten unter Errichtung kürzester und absolut gerader, leicht herstellbarer Strömungswege, die nun alle in einer Ebene liegen können und so zudem gestatten, das Armaturgehäuse sehr flach zu gestalten. Dabei können die Manometer sternförmig nach oben abragen und sind so gut ablesbar. Hingegen ragen alle Stutzen mehr oder weniger nach unten ab und erlauben so einen knickfreien Anschluss von Verbindungsschläuchen.

Entsprechend ist die Anordnung vorteilhaft derart, dass die obere Schmalseite und die daran anschliessenden Schmalseiten des Gehäuses je ein Manometer tragen und von den diesen Schmalseiten gegenüberliegenden Schmalseiten die Stutzen abragen.

Um dabei die Strömungsvorgänge genau verfolgen zu können, ist es vorteilhaft, wenn sich der gehäuseinnere Kanalabschnitt des Anschluss-Stutzens teilweise im Sichtbereich eines Schauglases befindet.

Ferner ergibt sich eine vorteilhafte Ausgestaltung dann, wenn der Anschluss-Stutzen der Niederdruckseite und der Hochdruckseite gemeinsam ist, wobei dann gegebenenfalls dessen gehäuseinnerer Kanalabschnitt über ein Umsteuerventil wechselweise mit dem Kanalabschnitt der Niederdruckseite resp. dem Kanalabschnitt der Hochdruckseite in Strömungsverbindung steht.

Eine beispielsweise Ausführungsform des Erfindungsgegenstandes ist nachfolgend anhand der Zeichnung näher erläutert. Es zeigen:

Fig. 1 in schaubildartiger Darstellung eine in die Strömungswege einer Anlage zum Umfüllen gasförmiger und/oder flüssiggasförmiger Druckmedien einsetzbare Kontrollarmatur; und

Fig. 2 ein Prinzip- und Funktionsschema der Kontrollarmatur gemäss Fig. 1.

Die veranschaulichte Kontrollarmatur umfasst ein Armaturgehäuse 20 mit einer sogenannten Niederdruckseite 1 und einer sogenannten Hochdruckseite 2. Die Kontrollarmatur dient hier beispielsweise der Ueberwachung eines Umfüllvorganges eines Kältemittels in Form eines Flüssiggases aus einem Füllzylinder-Aggregat 32 in den Kreislauf einer Klimaanlage oder eines Kühlaggregates 31 sowie der Ueberwachung der Evakuierung dieses Kreislaufes 31 mittels einer Vacuum-Pumpe 30 in der nachfolgend beschriebenen Weise. Hierbei wird aber festgehalten, dass sich die erfindungsgemässe Kontrollarmatur auch für die Ueberwachung anderer Strömungsvorgänge heranziehen lässt.

Die erfindungsgemässe Kontrollarmatur weist auf der Niederdruckseite 1 einen, über eine Zuleitung 34 mit dem Kreislauf 31 verbindbaren Ansaugstutzen 4 auf, der über ein Absperrventil 6 geführt ist und über einen Stutzen 25' mit einem Niederdruck-Manometer 25 in Strömungsverbindung stehen. In ähnlicher Weise umfasst die Hochdruckseite 2 einen, über eine Zuleitung 35 mit dem Kreislauf 31 verbindbaren Druckmedium-Auslass-Stutzen 12, der über ein Absperrventil 9 geführt ist und über einen Stutzen 26' mit einem Fülldruck-Manometer 26 in Strömungsverbindung stehen.

Beiden Druckseiten gemeinsam ist ein mit den vorgenannten Stutzen 4 und 12 über ein Umsteuer-Ventil 7 in Strömungsverbindung stehender Anschluss-Stutzen 5 mit einem Absperrventil 11 zum wechselweisen oder auch umsteuerbaren Anschluss (nicht gezeigt) einer Vacuum-Pumpe 30 über eine Zuleitung 36 oder mit dem Füllzylinder-Aggregat 32 über eine Zuleitung 37. Das Vacuum kann an einem, mit dem genannten Stutzen 5 verbundenen Manometer 10 abgelesen werden.

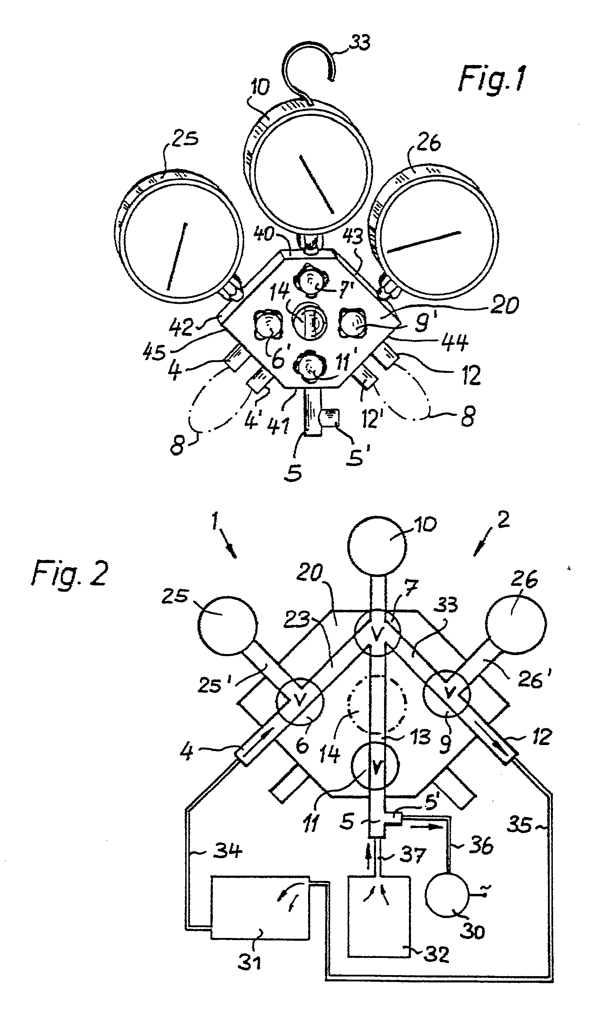

Wie insbesondere Fig. 1 zeigt, sind hierbei die Stellgriffe 6',7',9' und 11' der betreffenden Absperrventile 6,7,9 bzw. 11 frontseitig des Armaturgehäuses 20 angeordnet und somit leicht zugänglich. Die genannten Stutzen 4,5 und 12 hingegen ragen von den Schmalseiten des Gehäuses 20 nach unten und die Manometer 10,25 und 26 von den Schmalseiten des Armaturgehäuses 20 nach oben ab. Vom mittleren Manometer ragt ein Haken 33 nach oben ab, der erlaubt, die Kontrollarmatur beliebig irgendwo anzuhängen.

Weiter zeigt Fig. 2, dass der Anschluss-Stutzen 5 mit seinem gehäuseinneren Kanalabschnitt 13 teilweise im Sichtbereich eines Schauglases 14 liegt.

Weiter sind am Gehäuse 20 Blindanschlüsse 4' und 12' vorgesehen, welche dem luftfeuchtigkeitsdichten Abschluss des Ansaugstutzen 4 resp. Auslass-Stutzen 12 mittels Verbindungsschlauch 8 dienen (Fig. 1).

Um nun von den üblichen balkenförmigen und so ausladenden Gehäuseformen zu einer kompakteren, handlicheren Bauform mit möglichst kurzen Strömungswegen zu gelangen, ist das Armaturgehäuse 20 hexagonförmig ausgebildet. Hierbei bildet ein paralleles Seitenpaar die obere resp. untere Gehäuse-Schmalseite 41, zwischen welchen sich senkrecht und vorzugsweise zentrisch der gehäuseinnere Kanalabschnitt 13 des Anschluss-Stutzens 5 für die Vacuum-Pumpe 30 resp. den Druckmediums-Vorratsbehälter 32 erstreckt. Parallel und nahe den, an der oberen Schmalseite 40 anschliessenden Schmalseiten 42 und 43 des Gehäuses 20 verlaufen dann die Kanalabschnitte 23 resp. 33 des Ansaugstutzens 4 resp. des Auslass-Stutzens 12. Alle Stutzen resp. alle Kanalabschnitte verlaufen dabei in einer Ebene. Diese Bauform gestattet dabei eine nach oben sternförmig abragende und so gut ablesbare Anordnung der Manometer sowie mehr oder weniger alle nach unten abragende Stutzen, die vergleichsweise mit etwa waagrecht abragenden Stutzen einen eher knickfreien Anschluss von Verbindungs-Schläuchen ermöglichen.

Entsprechend ist die Ausbildung des Armaturgehäuses 20 so, dass die obere Schmalseite 40 und die daran anschliessenden Schmalseiten 42,43 des Gehäuses 20 je eines der Manometer 10 resp. 25 resp. 26 tragen und von den diesen Schmalseiten gegenüberliegenden Schmalseiten 41,44,45 Anschluss-Stutzen 5 resp. Auslass-Stutzen 12 resp. Ansaugstutzen 4 abragen.

Wie die Darstellung deutlich erkennen lässt, können durch die Wahl unterschiedlicher Umfangswinkel am hexagonförmigen Armaturgehäuse 20 die Neigungen der Anschlussflächen beidseits der oberen und unteren Schmalseite variiert und zweckmässig letztere kürzer als die Anschlussflächen ausgeführt werden.

Aus dem Vorbeschriebenen ergibt sich nunmehr eine Kontrollarmatur von äusserst kompakter, sehr flacher Bauweise, welche sich optimal handhaben lässt. Hierbei ist diese Kontrollarmatur in der Lage, trotz kurzer, direkter Führung der Anschluss-Stutzen alle denkbaren Funktionen zu erfüllen. Beispielsweise kann sowohl der Evakuierungsvorgang als auch der Umfüllvorgang des Mediums vom Vorratsbehälter 32 in das Kreislaufsystem 31 nicht nur anhand der Manometer-Druckanzeige sondern auch im Schauglas 14 verfolgt werden.

Hierbei ist es im Rahmen des vorliegenden Erfindungsgedankens insbesondere möglich sowohl auf das Umsteuerventil 7 an der Kreuzungsstelle der gehäuseinneren Kanalabschnitte 13, 23 und 33 als auch auf das Vacuum-Manometer 10 zu verzichten, dessen Funktion dann das Niederdruck-Manometer 25 übernehmen würde.

Allerdings ist das gerade auch ein Vorteil des erfindungsgemässen hexagonförmigen Armaturgehäuses, dass nunmehr auf engstem Raum ein weiteres Manometer ausschliesslich für das Vacuum vorgesehen werden kann, wogegen bisher nur je ein Manometer niederdruck- und hochdruckseitig angeordnet werden konnte.

**Patentansprüche**

1. In die Strömungswege einer Anlage zum Umfüllen gasförmiger und/oder flüssiggasförmiger Druckmedien einsetzbare Kontrollarmatur, welche sowohl niederdruckseitig als auch hochdruckseitig zum Anschluss an den Kreislauf einer zu füllenden Anlage dienende, absperrbare Anschluss-Stutzen sowie weitere, mit ersteren kommunizierende Anschluss-Mittel für den Anschluss einer Vacuum-Pumpe resp. an eine das Druckmedium enthaltenden Vorratsbehälter umfasst, und bei welcher Manometer mit den gehäuseinneren Kanalabschnitten der Anschluss-Mittel in Wirkungsverbindung stehen, dadurch gekennzeichnet, dass das Armaturgehäuse (20) wenigstens angenähert hexagonförmig ausgebildet ist, wobei ein paralleles Seitenpaar die obere (40) resp. untere Gehäuse-Schmalseite (41) bildet, zwischen welchen sich senkrecht und etwa zentrisch der gehäuseinnere Kanalabschnitt (13) des Anschluss-Stutzens (5) für die Vacuum-Pumpe (30) resp. den Druckmediums-Vorratsbehälter (32) erstreckt, in dessen oberem Endbereich die Kanalabschnitte (23 resp. 33) des Ansaugstutzens (4) resp. des Auslass-Stutzens (12) einmünden, die je parallel und nahe den, an der oberen Schmalseite (40) anschliessenden Schmalseiten (42 resp. 43) des Gehäuses (20) verlaufen.

2. Kontrollarmatur nach Anspruch 1, dadurch gekennzeichnet, dass sich der gehäuseinnere Kanalabschnitt (13) des Anschluss-Stutzens (5) teilweise im Sichtbereich eines Schauglases (14) befindet.

3. Kontrollarmatur nach Anspruch 1, dadurch gekennzeichnet, dass der Anschluss-Stutzen (5) der Niederdruckseite (1) und der Hochdruckseite (2) gemeinsam ist, wobei dann gegebenenfalls dessen gehäuseinnerer Kanalabschnitt (13) über ein Umsteuerventil (7) wechselweise mit dem Kanalabschnitt (23) der Niederdruckseite (1) resp. dem Kanalabschnitt (33) der Hochdruckseite (2) in Strömungsverbindung steht.

4. Kontrollarmatur nach Anspruch 1, dadurch gekennzeichnet, dass die obere Schmalseite (40) und die daran anschliessenden Schmalseiten (42,43) des Gehäuses (20) je ein Manometer (10 resp. 25 und 26) tragen und von den,diesen Schmalseiten gegenüberliegenden Schmalseiten (41 resp. 44, 45) die Stutzen (5 resp. 12 und 4) abragen.

## Claims

1. A control manifold inserted in the flow route of a system for transferring pressure media in a gaseous and/or liquid state, comprising on both the low-pressure side as well as the high-pressure side, closable connecting pieces or fittings which serve as the connection onto the circulation system of the unit that is to be filled, as well as further connecting means which commute with the closable connecting pieces for the connection of a vacuum pump, respectively onto a supply container containing the pressure medium, and by which manometers are in operative connection with the internal-casing conduit section of the connection means; wherein said casing (20) of said manifold is at least approximately hexagonal, a pair of parallel sides forming thereby the upper narrow side (40), respectively the lower narrow side (41) of said casing, between which, said internal-casing conduit section (13) of said connecting piece (5) for said vacuum pump (30), respectively said pressure-medium supply container (32) extends vertically and approximately concentrically; said conduit sections (23 and 33) of the intake piece (4), respectively outlet piece (12) leading into the upper end area of said supply container; said intake and outlet pieces each running parallel and near to said narrow sides (42 and 43) joining at said upper narrow side (40) of said casing (20).

2. The control manifold as defined in claim 1, wherein said internal-casing conduit section (3) of said connecting piece (5) is partially in the visual range of a sight glass (14).

3. The control manifold as defined in claim 1, wherein said connecting piece (5) is common to both said low-pressure side (1) and said high-pressure side (2); said internalcasing conduit section (13) thereof being, if necessary, alternately in flow connection with said conduit section (23) of said low-pressure side (1), respectively said conduit section (33) of said high-pressure side (2) by way of a reversing valve (7).

4. The control manifold as defined in claim 1, wherein a manometer (10 or 25 and 26) is disposed in each case on said upper narrow side (40) and the narrow sides (42, 43) of said casing joining thereon and, whereby, said connecting pieces (5 or 12 and 4) project from the narrow sides (41 or 44 and 45) lying opposite said narrow sides (40, 42, 43).

## Revendications

1. Appareillage de contrôle insérable dans les voies d'écoulement d'une installation de transvasement de fluides sous pression gazeux et/ou formant des gaz liquéfiés, comprenant aussi bien côté basse pression que côté haute pression des tubulures de raccordement pouvant être fermées, servant au raccordement au circuit d'une installation à remplir, ainsi que d'autres moyens de raccordement communiquant avec les tubulures mentionnées ci-dessus, pour le raccordement d'une pompe à vide et/ou d'un réservoir contenant le fluide sous pression, et dans lequel des manomètres coopèrent avec les sections de conduite des moyens de raccordement situées à l'intérieur du boîtier, caractérisé en ce que le boîtier (20) de l'appareillage est réalisé au moins approximativement sous une forme hexagonale, deux des côtés parallèles constituant le côté étroit supérieur (40) et le côté étroit inférieur (41) du boîtier, entre lesquels s'étend de façon perpendiculaire et à peu près centrale la section de conduite (13) située à l'intérieur du boîtier de la tubulure de raccordement (5) pour la pompe à vide (30) et le réservoir de fluide sous pression (32), dans la zone d'extrémité supérieure duquel débouchent les sections de conduite (23 et 33) de la tubulure d'aspiration (4) et de la tubulure d'évacuation (12) qui s'étendent parallèlement et près des côtés étroits (42 et 43) du boîtier (20) faisant suite au côté étroit supérieur (40).

2. Appareillage de contrôle suivant le revendication 1, caractérisé en ce que la section de conduite (13) située à l'intérieur du boîtier de la tubulure de raccordement (5) se trouve partiellement dans le champ de vision d'un voyant (14).

3. Appareillage de contrôle suivant la revendication 1, caractérisé en ce que la tubulure de raccordement (5) est commune au côté basse pression (1) et au côté haute pression (2) et, le cas échéant, la section de conduite (13) de cette dernière située à l'intérieur du boîtier (13) est en liaison d'écoulement par une vanne d'inversion (7) tour à tour avec la section de conduite (23) du côté basse pression (1) et avec la section de conduite (33) du côté haute pression (2).

4. Appareillage de contrôle suivant la revendication 1, caractérisé en ce que le côté étroit supérieur (40) et les côtés étroits faisant suite (42, 43) du boîtier (20) comportent respectivement un manomètre (10, 25 et 26), et en ce que les tubulures (5, 12 et 4) font saillie à partir des côtés étroits (41 et 44, 45) opposés à ces derniers.

*Fig.1*

*Fig. 2*